# EUROPÄISCHE PATENTSCHRIFT

(11) **EP 0 926 357 B1**
(45) Veröffentlichungstag und Bekanntmachung des Hinweises auf die Patenterteilung: **20.11.2002**
(21) Anmeldenummer: 98119595.1
(22) Anmeldetag: 16.10.1998
(51) Int. Cl.: F16B 2/24, F16B 5/06

(54) **Elastisch verformbarer Klemmkörper**
Corps de serrage élastiquement déformable
Elastically deformable clamping element

(30) Priorität: 15.12.1997 DE 19755594
(43) Veröffentlichungstag der Anmeldung: 30.06.1999
(73) Patentinhaber: Volkswagen Aktiengesellschaft, 38436 Wolfsburg (DE)
(72) Erfinder: Westphal, Torsten, 29379 Wittingen (DE)
(74) Vertreter: Rox, Thomas

(56) Entgegenhaltungen:
- DE-U- 9 203 133
- DE-U- 29 604 566
- GB-A- 2 211 906
- US-A- 2 109 213
- "Industrial Fasteners Handbook" 1980 , TRADE & TECHNICAL PRESS LIMITED , MORDEN, SURREY, ENGLAND XP002089152 * Section 8D - Clips, Clamps and straps, Seite 487, "edge clips" *

## Beschreibung

Die Erfindung betrifft einen elastisch verformbaren Klemmkörper gemäß dem Oberbegriff des Patentanspruchs 1.

Gattungsgemäße Klemmkörper sind allgemein in unterschiedlichsten Ausführungsformen bekannt, und zwar beispielsweise für Aufklemmungen an Wandungsrändern von Bauteilen oder für das Zusammenklemmen wenigstens zweier Wandungen miteinander. Üblicherweise werden die zumeist aus Federmetall oder Kunststoff hergestellten Klemmkörper so ausgeführt, daß der als Aufsetzstück wirkende Wandungsrand bzw. die miteinander zu verklemmenden Gegenstände zunächst in einen oberen Schlitzabschnitt eingeführt werden. Durch Eindrücken des Wandungsrandes bzw. der Gegenstände in den Schlitzgrund wird dann die eigentliche Klemmverbindung erreicht. Dies geschieht dadurch, daß im nichtverspannten Zustand die lichte Weite des Klemmkörperschlitzes geringer bemessen ist als die Gesamtdicke der Wandung bzw. der zur Verklemmung aneinander anliegenden Abschnitte der Gegenstände.

Der Erfindung liegt die Aufgabe zugrunde, auch für komplizierte Einbausituationen Klemmkörper bereitzustellen, die im Vergleich zu herkömmlichen Klemmkörpern ohne nennenswerte Einbuße an Klemmkraft einfach zu montieren sind.

Diese Aufgabe wird gelöst mit einem Klemmkörper gemäß den Merkmalen des Patentanspruchs 1. Die Unteransprüche betreffen besonders zweckmäßige Weiterbildungen der Erfindung.

Erfindungsgemäß wird also wenigstens eine der Klemmwandungen mit einem Sollbiegebereich, beispielsweise nach Art eines Filmscharniers oder einer gezielten Querschnittsschwächung, ausgeführt. Die Stabilität des Sollbiegebereiches ist aber so ausgelegt, daß im unverbauten Zustand die betreffende Klemmwandung so gestaltfest ausgeführt ist, daß allein durch Schwerkraft oder leichte Handandruckkraft keine Beweglichkeit gegeben ist. Für das Aufsetzen des Klemmkörpers an die miteinander zu verklemmenden Gegenstände wird also stets ein einwandfreies Trichterprofil bereitgestellt, das sich ausgehend von der Schlitzöffnung zum Schlitzgrund hin verjüngt. Die gezielt in die Klemmwandung eingebrachte Nachgiebigkeit sorgt allerdings unter beengten Raumverhältnissen dafür, daß beim Aufsetzen des Klemmkörpers auf die miteinander zu befestigenden Gegenstände der dem Schlitzgrund abgewandte Bereich der Klemmwandung bauteilbedingten Hindernissen ausweichen kann.

Bei dem gemäß Anspruch 2 ausgeführten Klemmkörper ist die Sollbiegestelle in einem Übergangsbereich zwischen dem der Einführung der Gegenstände dienenden Trichterprofil und dem eigentlichen Klemmabschnitt angeordnet. Damit werden in vorteilhafter Weise nur diejenigen Partien der Klemmkörperwandung beweglich gehalten, die zur Erzeugung der Klemmkraft ohnehin keinen Beitrag leisten.

Weitere Vorteile der Erfindung sind darin zu sehen, daß bereits in Serienproduktion befindliche Klemmkörper mit minimalem Werkzeugänderungsaufwand, insbesondere an Spritzwerkzeugen, an die erfindungsgemäße Konzeption angepaßt werden können. Darüber hinaus sind bei der eigentlichen Montage keine zusätzlichen Schwierigkeiten zu erwarten, weil die auf großzügige Raumverhältnisse ausgelegten Einführschrägen unverändert großzügig ausgeführt werden können. An dem Klemmkörper gegebenenfalls angeformte Zusatzfunktionselemente wie Spreizclips oder dergleichen können ebenfalls unverändert beibehalten werden.

Vorteilhafte Ausführungsbeispiele der Erfindung sind in der Zeichnung dargestellt.
Es zeigt
- Figur 1:: Eine Klemmanordnung aus zwei aneinanderliegenden Gegenständen, die ein erfindungsgemäßer Klemmkörper zumindest abschnittsweise umgreift, und
- Figur 2:: ein mit einem Zusatzfunktionselement ausgerüsteten Klemmkörper, der auf eine Bauteilwandung aufgeschoben ist.
In beiden Figuren weisen gleiche Bauteile bzw. Bauteilabschnitte die gleiche Bezifferung auf.

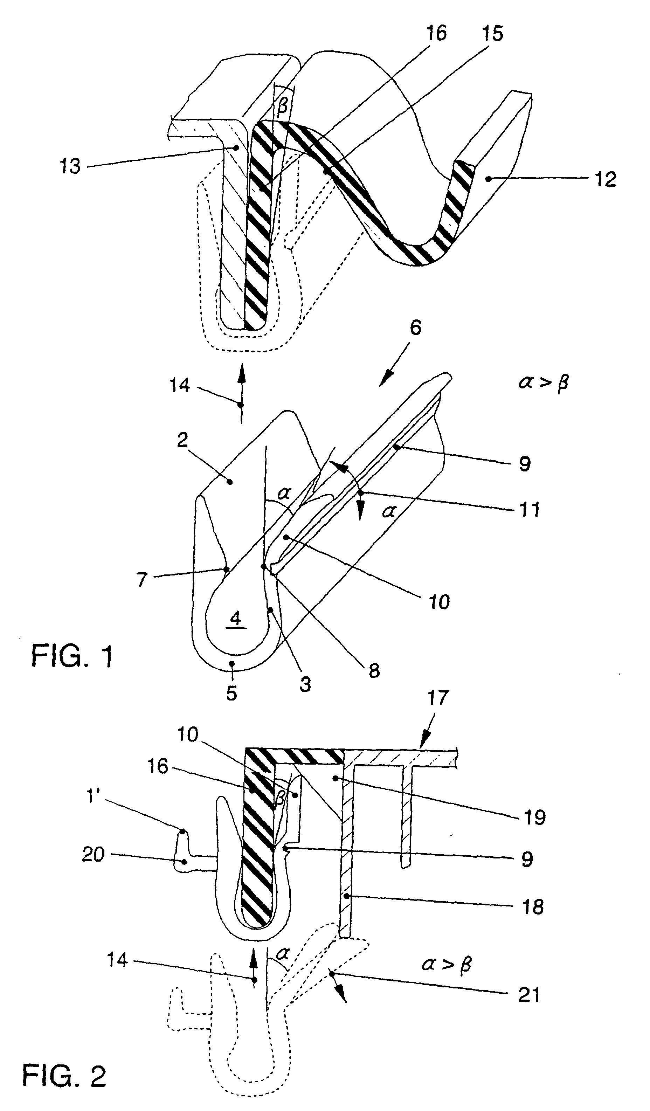

Man erkennt in Figur 1 einen insgesamt mit 1 bezeichneten Klemmkörper, der hier ein im wesentlichen U-förmig ausgeführtes Querschnittsprofil aufweist. Klemmwandungen 2, 3 schließen zwischen sich einen Schlitz 4 ein, der hier nach unten hin durch einen Schlitzgrund 5 abgeschlossen ist und nach oben hin einen Einführtrichter 6 bildet. Das untere Ende des Einführtrichters 6 ist gebildet durch Profileinschnürungen 7 und 8 an den Klemmwandungen 2 bzw. 3. An letzterer ist hier eine Sollbiegestelle 9 vorgesehen, die filmscharnierartig oder gemäß einer gezielten Querschnittsschwächung erzeugt sein kann. Als Querschnittsschwächung ist in diesem Falle nicht nur eine gezielte Reduzierung der Wandungsdicke denkbar. Ergänzend oder alternativ kann die Sollbiegestelle auch durch eine oder mehrere Lochreihen gebildet sein, die gleichsam eine Perforation bilden. Die Sollbiegestelle 9 wirkt innerhalb der Klemmwandung 3 praktisch wie ein Gelenk, welches eine Verschwenkung eines oberen Wandungsabschnittes 10 gemäß Doppelpfeil 11 ermöglicht. Zur Verklemmung zweier Gegenstände miteinander, beispielsweise eines Verkleidungsteiles 12 und eines Blechteiles 13, ist der Klemmkörper 1 gemäß Pfeil 14 in die mit Strichlinien angedeutete Position zu bewegen. Das Verkleidungsteil 12 weist hier einen gewölbten Abschnitt 15 auf, der zu einer daran angeformten Flanschpartie 16 einen vergleichsweisen geringen Abstand aufweist. Durch die Sollbiegestelle 9 kann bei der Aufsetzbewegung der obere Wandungsabschnitt 10 an der Kontur des Wölbabschnittes 15 entlangfahren und zum Flansch 16 hin bewegt werden, so daß der im unverbauten Zustand vorliegende Winkel α auf einen kleineren Winkel β reduziert wird. Derartige Befestigungssituationen konnten bislang mit herkömmlichen Klemmkörpern nur dadurch gelöst werden, daß entweder unter Verzicht auf Klemmkraft der gesamte Klemmkörper kleiner ausgeführt wurde oder bei gleichbleibender Klemmwirkung die Einführschräge zu Lasten der leichten Montierbarkeit wesentlich reduziert werden mußte.

Gleiches gilt auch für die Figur 2 dargestellte Konstellation. Hier ist der Klemmkörper 1' auf ein insgesamt mit 17 bezeichnetes Bauteil aufgeschoben, bei dem eine komplizierte Befestigungssituation durch die räumliche Nähe eines Halteflansches 16 und einer davon nur geringfügig beabstandeten Wandung 18 sowie eine Querrippe 19 gegeben ist. Der Klemmkörper 1 ist hiermit einem Zusatzfunktionselement versehen, daß beispielsweise nach Art eines Hakens 20 ausgebildet sein kann. Als Zusatzfunktionselemente können aber auch andere Konstruktionen in Betracht gezogen werden (beispielsweise Clipse, Haltezungen, Befestigungslöcher für einzuhängende Gegenstände etc.). Der Klemmkörper 1' ist hier ein einfaches Aufsetzteil, daß lediglich auf den Halteflansch 16 gemäß Pfeil 14 aufzusetzen ist. Auch bei dieser Befestigungskonstellation kann der obere Wandungsabschnitt 10 um die Sollbiegestelle 9 drehen und damit ohne Verlust an Klemmkraft zwischen dem Halteflansch 16 und der Wandung 18 plaziert werden. Wichtig bei der in Fig. 2 dargestellten Konstellation ist auch, daß beim Aufsetzen der Wandung 18 während des Montageprozesses zwar zunächst der obere Wandungsabschnitt 10 gemäß Drehpfeil 21 definiert zurückweichen kann. Die Sollbiegestelle 9 ist jedoch so dimensioniert, daß nach wie vor eine Einführschräge erhalten bleibt und somit durch leichtes seitliches Verschieben des Bauteils 17 eine einwandfreie Verklemmung möglich ist.

Die Erfindung ist nicht auf die in der Zeichnung dargestellten Ausführungsbeispiele beschränkt. Insbesondere die Geometrie des Querschnitts kann je nach zu lösender Befestigungsaufgabe höchst unterschiedlich ausgeführt sein. Ergänzend oder alternativ kann der Sollbiegebereich auch durch einen Werkstoff realisiert werden, der eine höhere Elastizität aufweist als übrige Bereiche der Klemmwandungen 2, 3. Derartige Klemmkörper könnten beispielsweise als Zweikomponenten-Spritzteile (POM/EPDM) ausgeführt sein.

## Patentansprüche

1. Elastisch verformbarer Klemmkörper (1, 1') mit wenigstens einem durch Klemmwandungen (2, 3) gebildeten und zur klemmenden Befestigung an einem Gegenstand (16) oder zur klemmenden Verbindung wenigstens zweier Gegenstände (12, 13) miteinander hergerichteten Schlitz (4), **dadurch gekennzeichnet, daß** wenigstens eine der Klemmwandungen (2, 3) einen Sollbiegebereich (9) aufweist.

2. Klemmkörper nach Anspruch 1, **dadurch gekennzeichnet, daß** durch die Klemmwandungen (2, 3) oberhalb des Sollbiegebereiches (9) ein der Montageerleichterung dienendes Trichterprofil und unterhalb der Sollbiegestelle (9) ein Klemmabschnitt erzeugt ist.

3. Klemmkörper nach Anspruch 1 oder 2, **gekennzeichnet durch** ein im wesentlichen U-förmiges Querschnittsprofil.

4. Klemmkörper nach wenigstens einem der Ansprüche 1 bis 3, **dadurch gekennzeichnet, daß** oberhalb eines den Schlitz (4) nach unten begrenzenden Schlitzgrundes (5) wenigstens eine der Klemmwandungen (2, 3) eine in das Schlitzinnere hineingerichtete Profileinschnürung (7, 8) aufweist.

5. Klemmkörper nach Anspruch 4, **dadurch gekennzeichnet, daß** der Sollbiegebereich (9) im Bereich der Profileinschnürung (7, 8) vorgesehen ist.

6. Klemmkörper nach Anspruch 1, **dadurch gekennzeichnet, daß** der Sollbiegebereich (9) durch einen Bauteilabschnitt wenigstens einer der Klemmwandungen (2, 3) gebildet ist, dessen Werkstoff eine größere Elastizität aufweist als übrige Bereiche der Klemmwandungen (2, 3).

## Claims

1. An elastically deformable clamping element (1, 1') with at least one slot (4) that is formed by clamping walls (2, 3) and designed for being clamped onto an object (16) or for clamping together at least two objects (12, 13), **characterized by** the fact that at least one clamping wall (2, 3) has a predetermined bending area (9).

2. The clamping element according to Claim 1, **characterized by** the fact that the clamping walls (2, 3) form a funnel profile for simplifying the installation above the predetermined bending area (9) and a clamping section underneath the predetermined bending area (9).

3. The clamping element according to Claim 1 or 2, **characterized by** an essentially U-shaped cross-sectional profile.

4. The clamping element according to at least one of Claims 1 - 3, **characterized by** the fact that at least one of the clamping walls (2, 3) has a profile contraction (7, 8) above a slot bottom (5) that forms the bottom limit of the slot (4), wherein said profile contraction points into the interior of the slot.

5. The clamping element according to Claim 4, **characterized by** the fact that the predetermined bending area (9) is arranged in the region of the profile contraction (7, 8).

6. The clamping element according to Claim 1, **characterized by** the fact that the predetermined bending area (9) is formed by a section of at least one clamping wall (2, 3), the material of which has a higher elasticity than the remaining regions of the clamping walls (2, 3).

## Revendications

1. Corps de pincement (1, 1') déformable élastiquement comprenant au moins une fente (4) formée au moyen de parois de pincement (2, 3) et préparée en vue de la fixation par pincement sur un objet (16) ou en vue de la liaison par pincement d'au moins deux objets (12, 13) l'un avec l'autre, **caractérisé en ce qu'**au moins l'une des parois de pincement (2, 3) comporte une zone de flexion imposée (9).

2. Corps de pincement suivant la revendication 1, **caractérisé en ce qu'**au moyen des parois de pincement (2, 3), il est produit au-dessus de la zone de flexion imposée (9) un profil d'entonnoir servant à faciliter le montage et au-dessous de la zone de flexion imposée (9) une partie de pincement.

3. Corps de pincement suivant la revendication 1 ou 2, **caractérisée par** un profil de section transversale essentiellement en forme de U.

4. Corps de pincement suivant au moins l'une des revendications 1 à 3, **caractérisé en ce qu'**au-dessus d'un fond de fente (5) délimitant la fente (4) vers le bas, au moins l'une des parois de pincement (2,3) comporte un étranglement de profil (7, 8) dirigé à l'intérieur de la fente.

5. Corps de pincement suivant la revendication 4, **caractérisé en ce que** la zone de flexion imposée (9) est prévue dans la zone de l'étranglement de profil (7, 8).

6. Corps de pincement suivant la revendication 1, **caractérisé en ce que** la zone de flexion imposée (9) est formée au moyen d'une partie de pièce d'au moins l'une des parois de pincement (2, 3) dont la matière possède une plus grande élasticité que les autres zones des parois de pincement (2, 3).
